# FASCICULE DE BREVET EUROPEEN

(11) **EP 2 028 236 B1**
(45) Date de publication et mention de la délivrance du brevet: **11.08.2010**
(21) Numéro de dépôt: 07114880.3
(22) Date de dépôt: 23.08.2007
(51) Int. Cl.: C09B 67/02, G02B 6/42, G01N 21/64

(54) **Ensemble comportant des agrégats J**
Zusammensetzung, die J-Aggregate umfasst
Composition comprising J-aggregates

(43) Date de publication de la demande: 25.02.2009
(73) Titulaire: CSEM Centre Suisse d'Electronique et de Microtechnique SA - Recherche et Développement, 2002 Neuchâtel (CH)
(72) Inventeur: Steiger, Rolf, 1724 Le Mouret (CH); Pugin, Raphaël, 2012 Auvernier (CH)
(74) Mandataire: GLN

(56) Documents cités:
- EP-A- 1 788 036
- LOSSON M.: "Self-organizing properties of dendrimers and potential applications" THÈSE PUR L'OBTENTION DU TITRE DE DOCTEUR ÈS SCIENCES, 24 octobre 2005 (2005-10-24), XP002417620

## Description

La présente invention se rapporte au domaine de la nanotechnologie, et concerne, plus spécialement, des assemblages supramoléculaires particuliers de colorants, notamment de la famille des cyanines, appelés agrégats J. Particulièrement, l'invention concerne un ensemble particulier comportant des agrégats J.

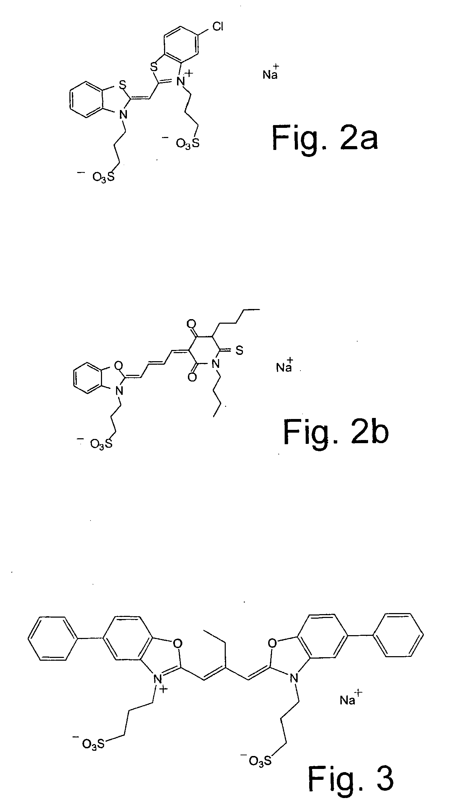

Dans le présent document, le terme de cyanines englobera aussi bien les cyanines que les méro-cyanines et leurs dérivés, tels que définis dans l'article de D. M. Sturmer paru dans le livre "Chemistry of heterocyclic compounds: special topics", volume 30, pp 441-601, édité par A. Weissberger and B.W. Rossiter, 1977 (Wiley Interscience, New York), et dont des exemples de structure sont donnés respectivement aux figures 2a et 2b, 3, 9 et 10.

Les agrégats J sont des auto-arrangements de molécules de cyanines qui forment des assemblages très ordonnés et dont les organisations structurelles sont de type cristallin. Une description des agrégats J et de leurs propriétés peut être trouvée dans l'article par H Kuhn et al. dans un livre intitulé "J-aggregates" par T. Kobayashi, ISBN 981-02-2737-X. Du fait de l'organisation quasiment sans défaut des agrégats J, ils présentent des propriétés remarquables. Ainsi, il a été observé que l'irradiation d'une monocouche bidimensionnelle d'agrégats J entraîne la formation d'un exciton qui est capable de se propager dans l'ensemble de cette monocouche à une vitesse élevée, typiquement 2 km/s, de manière cohérente et avec extrêmement peu de perte d'énergie.

### Etat de la technique

Les étonnantes propriétés des agrégats J ont été observées pour la première fois dans les années 1930. Depuis, de nombreuses applications ont été proposées à titre expérimental, démontrant l'étendue des possibilités offertes par les agrégats J. Par exemple, on peut citer des systèmes collecteurs de lumière (light harvesting systems) pour des dispositifs et des capteurs solaires, des composants pour des systèmes optiques non-linéaires, des systèmes d'enregistrement optique rapide, etc....

Cependant, ces différentes applications sont, pour l'instant, restées au niveau expérimental. En effet, il est très difficile de parvenir à organiser des monomères de cyanines de manière à ce qu'ils forment des agrégats J sans défaut et en monocouche et ce, de manière reproductible.

Dans la demande de brevet WO 2007/057356, la demanderesse a décrit un procédé permettant de réaliser ces agrégats de manière simple, rapide et reproductible, permettant une mise en oeuvre industrielle. Ce procédé propose de déposer une monocouche de macromolécules hyperbranches sur un support, cette monocouche servant de matrice modèle pour un dépôt ultérieur d'une couche de cyanines, qui s'auto-arrangent en agrégats J.

La présente invention a pour objet de nouveaux développements du procédé faisant l'objet de la demande de brevet susmentionnée.

### Divulgation de l'invention

Alors que l'on pensait qu'un paramètre important qui permettait aux cyanines de s'auto-arranger en agrégats J était le haut degré d'organisation que proposait la matrice modèle formée par les dendrimères et que cette organisation n'était possible que sur un support planaire, de nouvelles expérimentations ont montré, de manière tout à fait surprenante, qu'il était possible de former des agrégats J de très haute qualité sur un support mésoporeux sur lequel une couche de dendrimères ou de macromolécules hyperbranches a été préalablement adsorbée.

Ainsi, l'invention a pour objet un ensemble formé
- d'un support comprenant une couche mésoporeuse dont les pores ont un diamètre moyen BET supérieur à 1,5nm,
- de molécules dendrimères fonctionnalisant ladite couche, au moins dans ses pores,
- d'une couche de molécules de la famille des cyanines interagissant avec les molécules dendrimères et organisées en agrégats J.

L'invention concerne également un procédé de réalisation d'un tel ensemble.

### Brève description des dessins

L'invention sera mieux comprise à la lecture de la description qui suit, faite en référence aux dessins annexés dans lesquels:
- la figure 1 représente la structure d'un dendrimère, le poly(amidoamine) à coeur ethylenediamine de quatrième génération, dénommé PAMAM G4,
- les figures 2a et 2b donnent, respectivement, un exemple de cyanines et de méro-cyanines,
- la figure 3 montre la structure de la Myline 1,
- la figure 4 fournit un spectre d'absorption de la MYLINE 1 en solution en fonction de la concentration,
- la figure 5 représente le spectre d'absorption de la molécule MYLINE 1 déposée sur une couche mésoporeuse de TiO₂ d'épaisseur 3µm, pour un temps d'adsorption 40minutes, avec (courbe 5a) ou sans (courbe 5b) couche de PAMAM G4,
- la figure 6 montre les spectres d'absorption de la MYLINE 1 déposée sur support en verre avec (courbe 6a) ou sans (courbe 6b) couche de PAMAM G4,
- la figure 7 est un spectre d'absorption de l'agrégat J de MYLINE 1 sur une couche nanocristalline mésoporeuse de TiO₂ de 3µm d'épaisseur et fonctionnalisée avec une couche de PAMAM G4, pour un temps d'adsorption de 10minutes,
- la figure 8 montre la structure de la Myline 2, et
- la figure 9 montre la structure d'une cyanine cationique.

Les différents spectres présentent l'absorption ou l'émission, en fonction de la longueur d'onde incidente ou émise.

### Mode(s) de réalisation de l'invention

Un exemple de procédé de réalisation d'un agrégat J particulier va être décrit en détail ci-après. Comme on le comprendra, le procédé consiste essentiellement à déposer une matrice modèle sur un support mésoporeux, puis à disposer, sur cette matrice, les molécules de cyanines pour former l'agrégat J.

### Préparation du support

La première étape consiste à se doter d'un support mésoporeux. On peut choisir, par exemple, un support à base de boehmite (AIOOH) nanostructurée ou à base d'oxyde de titane (TiO₂) nanostructuré ou encore à base d'oxyde d'indium-étain (indium tin oxyde : ITO) mésoporeux et nanoparticulaire.

Pour préparer le premier support mentionné ci-dessus, on dépose un revêtement de nanoparticules d'AIOOH contenant 11 % en poids d'alcool polyvinylique, sur une feuille de polyester, au moyen d'un bar-coater. Le revêtement est ensuite séché et durci à 40°C. On pourra se référer au document US 7250202 pour obtenir des détails sur les conditions expérimentales à utiliser pour cette opération.

Pour préparer le deuxième support mentionné ci-dessus, on dépose un revêtement de nanoparticules de TiO₂, par exemple commercialisée par Degussa, sous la référence P25, contenant 4% en poids d'alcool polyvinylique, sur une feuille de polyester, au moyen d'un bar-coater. On pourra se référer au document US 2006/0036474 pour obtenir des détails sur les conditions expérimentales à utiliser pour cette opération.

Pour préparer le troisième support mentionné ci-dessus (ITO), on pourra se référer au document publié par J. Ederle et al., Appl. Phys. A, 2005, 81(7), 1363.

Comme on le comprendra ci-après, le diamètre moyen BET des pores doit être supérieur à 1,5nm afin de permettre aux molécules dendrimères d'y pénétrer. BET (Brunauer, Emmett et Teller qui sont les inventeurs de cette méthode) est le nom de la méthode analytique utilisée pour caractériser la porosité par absorption d'azote à basse température (77°K). A partir de la porosité, il est possible de déterminer le volume des pores, leur diamètre moyen, leur distribution de taille et la surface spécifique des supports. Pour plus de renseignements, on pourra se référer aux pages 131-136 de "Introduction to Colloid and Surface Chemistry", 4ème édition, par D.J. Shaw, Ed. Butterworth-Heinemann Ltd. 1994, ISBN 0 7506 1182 0.

De manière avantageuse, il est à noter que le support n'a pas nécessairement besoin d'un nettoyage spécifique. Dans certains cas, notamment avec un support en ITO, il a toutefois été remarqué qu'une étape d'activation par plasma permettait d'améliorer l'assemblage des molécules de colorant en agrégats J. On pourra se référer à la demande de brevet WO 2007/057356 pour obtenir des détails sur le traitement du support par plasma.

### Dépôt de la matrice modèle ("template")

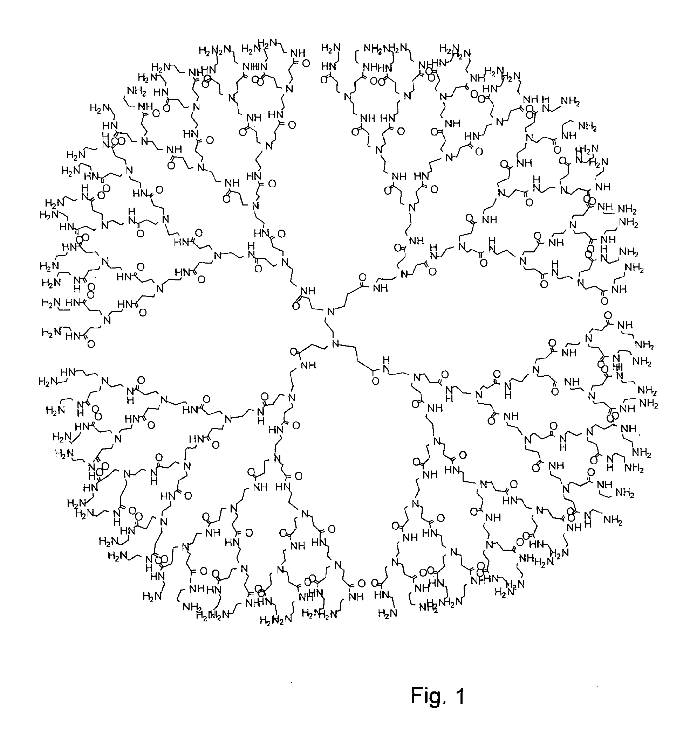

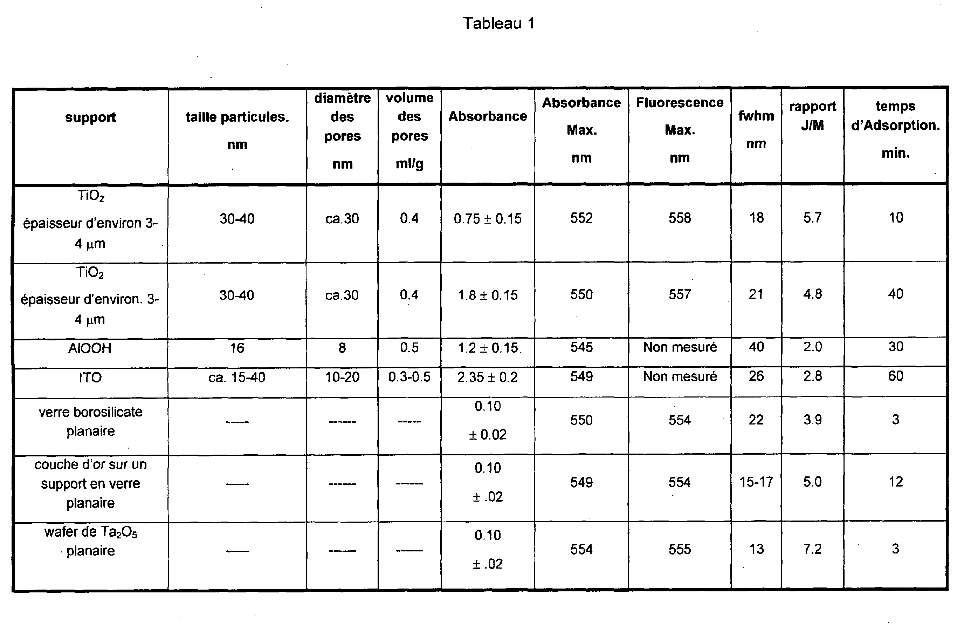

Typiquement, une matrice modèle est réalisée à base de dendrimères, c'est-à-dire de macromolécules constituées, chacune, de monomères qui s'associent selon un processus arborescent autour d'un coeur central plurifonctionnel. La construction arborescente s'effectue par la répétition d'une même séquence de réactions jusqu'à l'obtention à la fin de chaque cycle réactionnel d'une nouvelle génération et d'un nombre croissant de branches identiques. Après quelques générations, le dendrimère prend généralement une forme sphérique, hautement ramifiée et plurifonctionnalisée grâce aux nombreuses fonctions terminales présentes en périphérie. Les diverses ramifications créent au sein même de la structure moléculaire des cavités internes, proches du coeur. Un exemple de dendrimère, le ethylenediamine-core poly(amidoamine) de quatrième génération, dénommé PAMAM G4, est représenté à la figure 1.

Les dendrimères présentent l'avantage d'être monodisperses et de présenter une structure, une géométrie et une stoechiométrie rigoureusement contrôlées. En effet, le schéma réactionnel de leur préparation étant clairement défini, chacune des molécules d'un dendrimère donné est identique à une autre. Pour une molécule de dendrimère définie, le nombre de fonctions (internes et périphériques), la densité de charges, la surface et le volume occupé, la porosité de ces nanomolécules sont connus. Le tableau ci-après donne quelques exemples de dendrimères ainsi que certaines de leurs caractéristiques (propriétés théoriques).

| | Nombre de fonctions périphériques | Diamètre théorique (nm) | Surface externe (nm², modèle forme sphérique) | Densité de surface des groupes fonctionnels (parnm²) |
|---|---|---|---|---|
| PAMAM G0 | 4 | 1.5 | modèle non valide | - |
| PAMAM G1 | 8 | 2.2 | modèle non valide | - |
| PAMAM G4 | 64 | 4.5 | 63.6 | 1 |
| PAMAM G6 | 256 | 6.7 | 141 | 1.8 |

On remarque que le diamètre des dendrimères varie en fonction de la génération. Selon le dendrimère, le diamètre des pores du support doit être adapté afin de permettre aux molécules de dendrimère d'y pénétrer. On voit que, pour que des dendrimères de type PAMAM G0 puissent pénétrer dans les pores, ceux-ci doivent être d'un diamètre supérieur à 1.5nm. Bien que comportant peu de fonctions périphériques, ces dendrimères permettent néanmoins à des cyanines de s'auto-arranger. Si l'on veut utiliser des dendrimères de génération supérieure, les pores devront être d'un diamètre moyen supérieur à 1.5nm. Toutefois, les dendrimères présentent une certaine déformabilité et peuvent par conséquent pénétrer dans des pores dont le diamètre est inférieur à leur diamètre théorique. Cette remarque est d'autant plus valable pour les dendrimères de basse génération très déformables. Pour les dendrimères de plus hautes générations, la molécule hautement ramifiée adopte généralement une forme sphérique dont la déformabilité et la flexibilité des branches internes est progressivement réduite. Ainsi, et à titre d'illustration non limitative, on peut considérer qu'un support dont les pores sont d'au moins 1.5nm, 4nm et 6nm peuvent respectivement recevoir des PAMAM de génération 1, 4 et 6. Il est évidemment nécessaire qu'un minimum d'environ vingt molécules de cyanine puisse également pénétrer à l'intérieur des pores pour former un agrégat J. Les cyanines étant beaucoup plus petites (volume d'une molécule environ 0.8nm³ pour MYL 1) que les dendrimères, cette condition est généralement remplie avec des pores au sein desquels des dendrimères ont pu pénétrer.

Les couches nanocristallines séchées de AIOOH, de TiO₂ ou de ITO mentionnées lors de l'étape précédente sont plongées, sans traitement de nettoyage, pendant 18 heures, dans une solution éthanolique de ethylenediamine-core poly(amidoamine) de génération 4 (PAMAM G4) de concentration 1.10⁻⁴M. Grâce aux interactions entre les oxydes métalliques contenus dans ces couches et les nombreux groupes fonctionnels du PAMAM, celui-ci est efficacement adsorbé à la surface de la couche mésoporeuse, y compris à l'intérieur des pores.

Puis, la couche mésoporeuse contenant le dendrimère est rincée avec de l'éthanol pur afin d'éliminer les molécules de PAMAM non liées à la surface du support. Enfin, elle est séchée sous un courant d'azote.

On obtient ainsi un ensemble composé d'un support en polyester recouvert d'une couche mésoporeuse à base de nanoparticules d'oxyde métalliques (AIOOH, TiO₂ ou ITO) fonctionnalisée en surface et au sein des mésopores par une matrice dendrimèrique de type PAMAM G4.

### Formation d'agrégats J

La cyanine utilisée pour former l'agrégat J est la [5, 5'-diphenyl-dibenzoxazolo N, N'-propylsulfonate]-9 ethyl trimethine cyanine (appelée MYLINE 1), illustrée sur la figure 3. Ces cyanines étant sensibles à la lumière, il faut absolument éviter de les exposer à la lumière, tant lors de la préparation du réactif que lors de la réaction. La cyanine est mise en solution dans de l'acétone à une concentration de 7.10⁻⁴M. Le mélange est agité magnétiquement pendant 2 heures pour garantir la solubilisation totale du réactif.

La cyanine proposée est chargée négativement. Aussi, pour lui permettre d'interagir avec le PAMAM déposé sur le support, il est possible de charger positivement ce dernier. Pour ce faire, le support est préalablement immergé dans une solution acide, typiquement de l'acide chlorhydrique à pH 3,5 afin de protonner toutes les fonctions amines du PAMAM ou seulement une partie d'entre elles. Le support ainsi activé est ensuite plongé dans la solution de cyanine ci-dessus, pour une durée comprise entre quelques secondes et quelques minutes. Ensuite, l'ensemble contenant l'agrégat J est rincé avec de l'acétone pure et est séché sous un courant d'azote.

La durée d'adsorption au sein des matrices mésoporeuses fonctionnalisées est supérieure à celle qui est appliquée pour former des agrégats J sur des supports planaires (voir tableau 1). Ceci peut s'expliquer par le fait que le temps requis pour que les molécules de cyanine diffusent puis s'auto-assemblent à l'intérieur d'un mésopore joue un rôle important dans la vitesse de formation de l'agrégat J. Vu le diamètre et la géométrie des pores qui tout deux participent fortement à réduire la cinétique de diffusion des cyanines, la vitesse d'agrégation de ces mêmes cyanines en agrégat J au sein de la matrice mésoporeuse est logiquement plus faible que sur surfaces planaires. On peut néanmoins noter que les durées d'adsorption mentionnées dans le tableau pour des supports mésoporeux sont parfaitement compatibles avec des procédés industriels de type continu.

### Résultats

Comme le montre le tableau 1, on obtient un ensemble composé d'un support, selon l'exemple en polyester, recouvert d'une couche mince de AIOOH, de TiO₂ ou d'ITO mésoporeux et nanocristallin, dont les mésopores contiennent une ou plusieurs couches de dendrimère PAMAM G4 selon l'exemple, et d'agrégats J de la cyanine MYLINE 1 organisés à la surface de ces dendrimères.

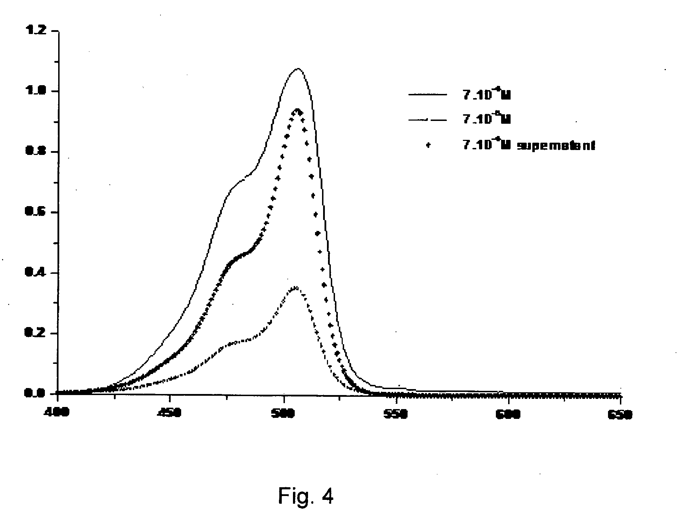

L'ensemble obtenu ci-dessus, particulièrement la couche de MYLINE 1, est analysé au moyen d'un spectrophotomètre UV-visible. Pour information et comparaison, le spectre d'absorption de la molécule MYLINE 1 en solution et non agrégée est décrit figure 4. L'étude du spectre en solution montre trois pics pour la cyanine MYLINE 1, à 479nm, 506nm et 551 nm, décrits dans la littérature comme correspondant respectivement aux pics d'absorption du dimère, du monomère et d'un très faible maximum d'absorption à 551 nm correspondant à des traces de l'agrégat J de MYLINE 1 préformé en solution.

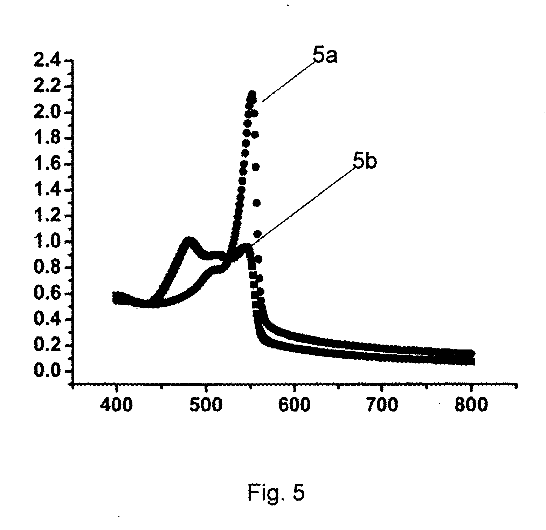

Le spectre obtenu avec la MYLINE 1 (temps d'adsorption : 40min) sur la couche nanocristalline de TiO₂ de environ 3µm d'épaisseur fonctionnalisée avec du dendrimère PAMAM G4, figurant sur la deuxième ligne du tableau 1, est présenté à la figure 5a. Comparé au spectre d'absorption de la molécule MYLINE 1 en solution (figure 4) et à celui de la MYLINE 1 déposée sur une couche mésoporeuse de TiO₂ non fonctionnalisée par le dendrimère PAMAM G4 (figure 5, spectre 5b), le spectre 5a démontre le rôle crucial de la couche PAMAM G4 dans le processus d'agrégation contrôlée de la MYLINE 1. En présence de la couche PAMAM G4 la formation d'agrégats J hautement définis est démontrée par la présence d'un pic d'absorption à 550nm ; sans PAMAM G4, la formation d'agrégats J (550nm) est défavorisée par la présence de monomères (506nm) et de dimères (479nm).

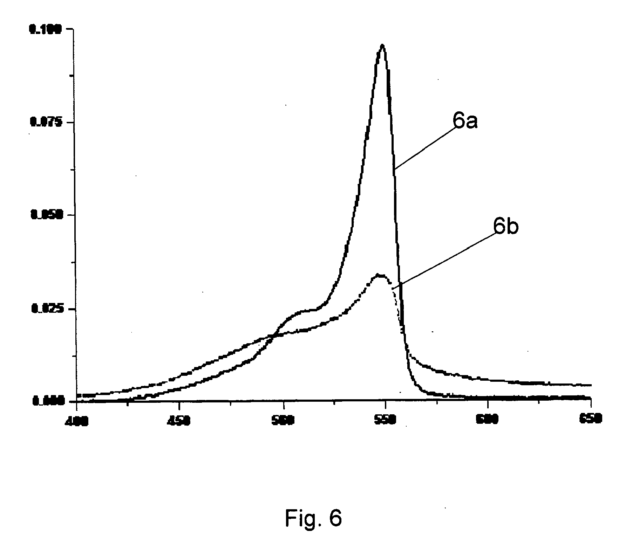

Pour permettre de comparer les résultats obtenus sur un support mésoporeux avec ceux obtenus précédemment avec un substrat planaire, on peut comparer les spectres des figures 6 et 5. En présence de PAMAM (spectres 5a et 6a), les longueurs d'onde du pic d'agrégat J obtenues selon le procédé ci-dessus et pour des échantillons de référence obtenus par la technique de Langmuir-Blodgett concordent de manière remarquable, attestant ainsi de la régularité et de la qualité, c'est-à-dire, la haute organisation moléculaire et la grande homogénéité, de l'agrégat J produit. De plus, le haut degré d'organisation moléculaire est confirmé par le rapport J/M (agrégat J/monomère) = 4.8 à 5.7 (Tableau 1), qui est même supérieur au rapport J/M obtenu sur un support en verre planaire (Tableau 1) et qui est équivalent au plus haut rapport J/M obtenu dans les couches de Langmuir-Blodgett. De même, la largeur du spectre à mi-hauteur (fwhm, Tableau 1) est semblable à celle obtenue sur les supports de verre et démontre la haute organisation moléculaire des agrégats J.

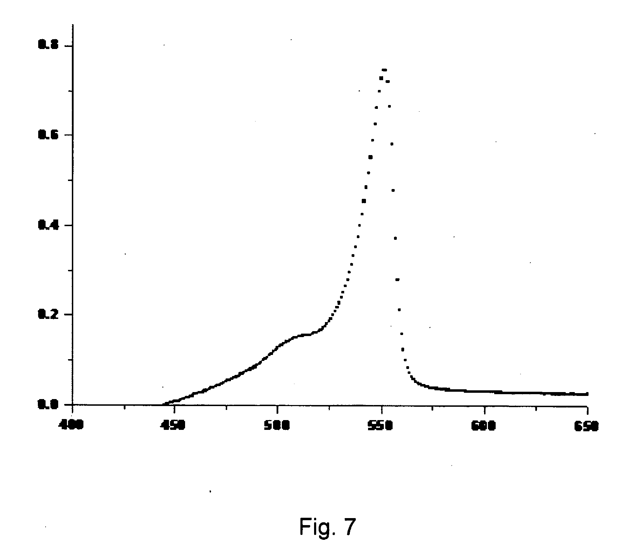

La qualité de l'organisation des agrégats J formés est confirmée par la comparaison des longueurs d'onde d'émission de fluorescence et d'absorption de l'ensemble obtenu ci-dessus. Le pic d'absorption apparaît à une longueur d'onde de 550nm, tandis que celui d'émission apparaît à 557nm (Tableau 1). Ce faible écart s'explique notamment par le fait que le spectre de fluorescence sur TiO₂ montre une intensité faible due au transfert d'électrons de l'agrégat J vers le TiO₂, ce qui diminue aussi la résolution en longueur d'ondes. Néanmoins, il montre que les molécules sont hautement organisées en agrégats J étant donné que ces agrégats présentent des spectres d'émission semblables à ceux obtenus dans les couches obtenues par Langmuir-Blodgett (fluorescence de résonance). Une qualité encore meilleure d'agrégats J a pu être obtenue (fwhm : 18nm) avec des temps d'adsorption plus courts (10min) sur une couche nanocristalline de TiO₂ d'une épaisseur d'environ 3µm (figure 7 ; tableau 1).

Comparée à l'absorbance d'une monocouche d'agrégats J obtenue sur les différents supports planaires testés (verre, or, Ta₂O₅, exemples donnés dans la demande WO 2007/057356), l'absorbance des agrégats J formés sur les couches d'oxydes métalliques mésoporeux est beaucoup plus élevée. Comme l'illustre le tableau 1, selon la nature, de l'épaisseur, de la couche mésoporeuse et du temps d'adsorption, les absorbances vont de 0.7 à 2.4 (jusqu'à plus de 20 fois supérieure à l'absorbance observée sur supports planaires, spectre 5a à comparer au spectre 6a). Ces très hautes valeurs d'absorbance sont reliées à l'importance de la surface spécifique interne des couches d'oxydes métalliques mésoporeux qui permet la formation d'agrégats J à la surface externe de cette couche mais également au sein même des mésopores dont les paroies ont été préalablement décorées d'une couche de PAMAM.

Un paramètre important, qui indique que des agrégats J déposés sur des supports mésoporeux peuvent être appliqués industriellement, est la stabilité dans le temps des agrégats formés. On observe que, en absence de lumière, les agrégats J obtenus sur des supports mésoporeux, restent remarquablement organisés et même, que l'intensité des pics augmente légèrement. On peut penser que cet effet est dû à l'élimination de traces de solvant encore présentes juste après la réaction. Sur les différentes couches décrites ci-dessus, la stabilité en absence de lumière est équivalente.

### Variantes au niveau du support

Les exemples ci-dessus proposent trois types de couches mésoporeuses, utilisées comme support pour recevoir une couche de dendrimères. D'autres oxydes métalliques mésoporeux peuvent être envisagés, tels que SiO₂, γ-Al₂O₃, ZrO₂, Ta₂O₅. En outre, des nanoparticles de type TCO (oxyde conducteur transparent), comme du SnO₂ et du ZnO dopés sont également utilisables. Dans tous les cas, il suffit que le diamètre des pores soit assez grand pour permettre aux molécules de dendrimères et à au moins 20 molécules de cyanine d'y pénétrer. Le support doit aussi présenter des interactions suffisantes avec les dendrimères pour qu'ils s'adsorbent à sa surface.

Le terme d'adsorption doit ici être interprété de manière large. En effet, il existe plusieurs sortes d'adsorption. L'adsorption physique ou physisorption met en jeu des liaisons faibles, du type forces de Van der Waals. Dans d'autres cas, l'adsorption met en jeu des énergies de liaison importantes. On parle alors d'adsorption chimique ou chimisorption. Les forces mises en jeu sont du même type que celles qui sont impliquées lors de la formation des liaisons chimiques. Les deux types d'interaction entre les dendrimères et le support sont possibles.

En outre, il convient également de noter la possibilité de lier de façon covalente les dendrimères sur le support. La liaison covalente peut être formée directement entre les groupes périphériques du dendrimère et les sites réactifs du support et/ou via des réactions de réticulation entre les molécules de dendrimères. Un exemple d'un tel accrochage est par exemple l'attachement covalent de dendrimères type poly(amidoamine)-organosilicone (PAMAMOS) sur verre décrit dans l'article de P.R. Dvornic, Journal of Polymer Science, 2006, 44, 2255-2273. L'accrochage covalent du dendrimère peut également être effectué via l'utilisation d'une couche intermédiaire d'accrochage entre le support et la couche de dendrimères. Un exemple d'une telle couche intermédiaire peut être trouvé dans l'article de M. Wells et R. M. Crooks, J. Am. Chem. Soc. 1996, 118, 3988-3989.

Les différentes possibilités d'adsorption et d'accrochage covalent des dendrimères permettent de fonctionnaliser les couches mésoporeuses, en ce sens qu'elles permettent aux cyanines déposées ultérieurement de s'auto-arranger en agrégats J.

### Variantes au niveau de la matrice modèle

Divers types de PAMAM peuvent être utilisés, qu'ils soient chargés positivement ou négativement. D'autres dendrimères, tels que des PAMAM G3.5, G4.5, ... , Gm.5, ... avec des fonctions périphériques carboxyliques (COOH) ou carboxylates (COO-), forment également des matrices permettant à des cyanines de s'auto-arranger en agrégats J. La caractéristique essentielle que doit présenter la molécule formant la matrice modèle est que sa surface extérieure, c'est-à-dire celle formant l'interface avec le milieu réactionnel lorsqu'elle est sur le support, doit être définie et régulière. Elle doit, en outre, disposer d'une haute densité de groupes fonctionnels périphériques pour interagir efficacement avec le support afin d'y être adsorbée ou liée de façon covalente mais aussi pour interagir avec des molécules de colorants et participer à leur auto-assemblage en agrégats J. De la nature et de la densité des groupes fonctionnels au sein de l'architecture du dendrimère, et du type de l'interaction groupes fonctionnels/colorants dépendra la qualité de l'auto-assemblage et de l'agrégat J résultant.

L'homme du métier saura faire les expérimentations nécessaires pour tester de manière large des macromolécules à architecture dendritique, comprenant des dendrimères, mais aussi des polymères hyperbranchés. Précisons que les polymères hyperbranchés, dont l'architecture moléculaire est plus irrégulière, sont obtenus par polymérisation de monomères branchés multifonctionnels ABn suivant un processus non-itératif. Tandis que les dendrimères sont en général de taille limitée et monodisperses (de par les méthodes de synthèse et par des phénomènes de congestion stérique), les polymères hyperbranchés sont généralement plus polydisperses. Cependant de tels polymères hyperbranchés peuvent également convenir pour l'auto-assemblage de colorants en agrégats J dans la mesure où une partie des groupes fonctionnels permet l'adsorption ou l'accrochage covalent de cette molécule sur le support, alors qu'une autre partie de la structure hyperbranchée du polymère interagit avec des molécules de colorants et participe à leur auto-assemblage.

Tout comme pour les différents dendrimères considérés, de la nature et de la densité des groupes fonctionnels au sein de l'architecture du polymère hyperbranché, et du type de l'interaction groupes fonctionnels/colorants dépendra la qualité de l'auto-assemblage et de l'agrégat J résultant. De plus la taille du polymère hyperbranché devra également permettre son incorporation au sein de la structure mésoporeuse du support. Membres principaux de la famille des macromolécules à architecture dendritique les polymères hyperbranchés sont dès lors considérés inclus lors de l'utilisation du terme dendrimère dans le cadre de la présente invention.

### Variantes au niveau des cyanines

Les différents colorants englobés dans la définition de la famille des cyanines donnée ci-dessus, c'est-à-dire les cyanines, les méro-cyanines et leurs dérivés, sont susceptibles de s'auto-arranger pour former des agrégats J sur une matrice modèle telle que définie aux paragraphes précédents. Bien entendu, la cyanine et la molécule formant la matrice modèle doivent être choisies l'une en fonction de l'autre pour que la cyanine interagisse avec les groupes fonctionnels présents à la périphérie de la matrice modèle, ce qui implique, par exemple, une complémentarité des charges électriques et une similitude des densités de charges.

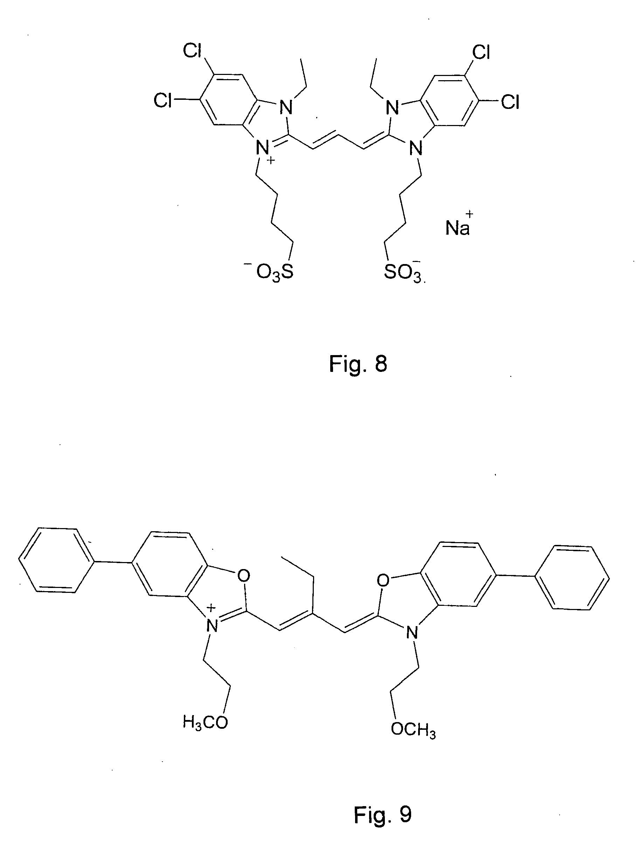

La possibilité d'étendre à d'autres cyanines le procédé d'agrégation sur un support mésoporeux préalablement fonctionalisé par une couche de dendrimères ou de macromolécules hyperbranches a été démontrée. En effet la 5,5', 6,6'-tétrachloro-(2,2'-di-butylsufonate, 9,9'-diethyle) benzimidazolo triméthine cyanine (contreion Na⁺), appelée Myline 2 et représentée sur la figure 8, peut être déposée et organisée sur une matrice modèle en PAMAM G4, préalablement déposée sur une couche mésoporeuse de TiO₂ (d'une épaisseur d'environ 3 µm).

La Myline 2 a été utilisée sous forme anionique, en solution dans de l'acétone à 7.10⁻⁴M. Le PAMAM ayant été protonné, ainsi que décrit ci-dessus, la matrice modèle est plongée de 10 à 60minutes dans la solution de Myline 2 et rincée à l'acétone. La formation d'agrégats J a été observée, confirmée par la présence d'un pic d'absorption à 583nm. Si l'on compare l'absorbance des agrégats J de Myline 2 formés sur les couches de TiO₂ mésoporeux à l'absorbance d'une monocouche d'agrégats J obtenue sur une couche planaire d'or (voir la demande de brevet WO 2007/057356 précitée), celle-ci est plus élevée (environ 0.27 pour un temps d'immersion de 10minutes sur TiO₂ mésoporeux alors qu'une absorbance maximum de 0.09 est observée sur support d'or planaire). Ces hautes valeurs d'absorbance sont reliées à l'importance de la surface spécifique interne des couches de TiO₂ mésoporeux qui permet la formation d'agrégats J à la surface externe de cette couche mais également au sein même des mésopores dont les parois ont été préalablement décorées d'une couche de PAMAM. Concernant la largeur du spectre à mi-hauteur obtenue sur les couches de TiO₂ mésoporeux, cette dernière est semblable à celle obtenue sur les supports d'or planaire (fwhm = 20nm) et démontre la haute organisation moléculaire des agrégats J de la Myline 2 sur les couches de TiO₂ mésoporeux.

De manière analogue, une cyanine de type cation peut également s'auto-arranger pour former des agrégats J sur une matrice modèle chargée négativement. Un exemple d'une telle cyanine est illustré à la figure 9 alors qu'un dendrimère chargé négativement peut, par exemple, être un PAMAM de génération, Gm.5 avec fonctions périphériques carboxylates. Dans ce cas, le procédé décrit ci-dessus comporte une étape consistant à charger négativement les molécules dendrimères de la couche disposée sur le support. Par exemple, cette étape peut consister à déprotonner les molécules dendrimères par une réaction en milieu basique.

D'autres types d'interactions faibles comme par exemple les interactions de Van der Waals ou les liaisons hydrogène peuvent également assurer l'auto-assemblage des cyanines en agrégats J sur une matrice dendrimère. Ces interactions ou liaisons entre cyanines et dendrimères garantissent des interactions suffisantes avec la matrice dendrimère tout en assurant aux cyanines la mobilité nécessaire pour leur auto-assemblage et la formation d'agrégats J de haute qualité.

Ainsi est proposé un procédé particulièrement simple, permettant d'obtenir des agrégats J de très haute qualité, très stables et pouvant être mis en oeuvre dans des applications industrielles. Notamment, les agrégats J réalisés selon l'invention au sein de matrices mésoporeuses peuvent être directement utilisés comme des systèmes collecteurs de lumière (light harvesting systems) pour des dispositifs et des capteurs solaires, pour des interfaces pour la détection de molécule acceptrice d'électrons (par mesure de la réduction de l'émission de fluorescence des agrégats J).

Les techniques décrites ci-dessus ouvrent de larges perspectives en terme d'expérimentation, pour les appliquer à d'autres macromolécules à architecture dendritique tout comme les polymères hyperbranchés, à d'autres substrats mésoporeux ou à d'autres types de colorants. L'homme du métier saura alors planifier et exécuter les expérimentations nécessaires pour tester de manière large les différentes combinaisons support mésoporeux / macromolécules dendritiques / colorants susceptibles de former des agrégats J.

## Revendications

1. Ensemble formé
- d'un support comprenant une couche mésoporeuse dont les pores ont un diamètre moyen BET dimensionné de manière à permettre à des macromolécules à architecture dendritique d'y pénétrer,
- de macromolécules à architecture dendritique fonctionnalisant ladite couche, au moins dans ses pores,
- d'une couche de molécules de la famille des cyanines interagissant avec les macromolécules à architecture dendritique et organisées en agrégats J.

2. Ensemble selon la revendication 1, **caractérisé en ce que** ladite couche est réalisée en un matériau choisi parmi AIOOH, TiO₂, ITO, SiO₂, γ-Al₂O₃, ZrO₂, SnO₂, ZnO, Ta₂O₅, ou encore à base de nanoparticles d'oxydes conducteurs dopés.

3. Ensemble selon l'une des revendications 1 et 2, **caractérisé en ce que** le diamètre moyen BET des pores de la couche mésoporeuse est supérieur à 1,5nm.

4. Procédé de réalisation d'un ensemble selon l'une des revendications précédentes, comprenant les étapes suivantes:
i. se doter d'un support comprenant une couche mésoporeuse dont les pores ont un diamètre moyen BET dimensionné de manière à permettre à des macromolécules à architecture dendritique d'y pénétrer,
ii. déposer sur le support une solution de macromolécules à architecture dendritique susceptibles de pénétrer à l'intérieur des pores du support, de manière à pouvoir fonctionnaliser les pores,
iii. recouvrir l'ensemble obtenu avec une solution de cyanines réagissant avec lesdites macromolécules à architecture dendritique pour s'auto-arranger en agrégats J.

5. Procédé selon la revendication 4, **caractérisé en ce qu'**il comporte, avant l'étape iii, une étape supplémentaire consistant à charger positivement les macromolécules à architecture dendritique de la couche disposée sur le support.

6. Procédé selon la revendication 5, **caractérisé en ce que** ladite étape supplémentaire consiste à protonner les macromolécules à architecture dendritique par une réaction en milieu acide.

7. Procédé selon la revendication 4, **caractérisé en ce qu'**il comporte, avant l'étape iii, une étape supplémentaire consistant à charger négativement les macromolécules à architecture dendritique de la couche disposée sur le support.

8. Procédé selon la revendication 7, **caractérisé en ce que** ladite étape supplémentaire consiste à déprotonner les macromolécules à architecture dendritique par une réaction en milieu basique.

9. Procédé selon l'une des revendications 4 à 8, **caractérisé en ce qu'**il comprend, après l'étape ii, une étape de rinçage pour éliminer les macromolécules à architecture dendritique n'ayant pas adhéré au support.

10. Procédé selon l'une des revendications 4 à 9, **caractérisé en ce qu'**il comprend, après l'étape iii, une étape de rinçage pour éliminer les cyanines n'ayant pas réagi avec les macromolécules à architecture dendritique.

11. Procédé selon la revendication 10, **caractérisé en ce que** ladite couche est réalisée à base d'un matériau choisi parmi AIOOH, TiO₂, ITO, SiO₂, γ-Al₂O₃, ZrO₂, SnO₂, ZnO, Ta₂O₅, ou encore à base de nanoparticles d'oxydes conducteurs transparents dopés.

12. Procédé selon l'une des revendications 4 à 11, **caractérisé en ce que** lesdits macromolécules à architecture dendritique sont du ethylenediamine-core poly(amidoamine) (PAMAM), avantageusement de génération 1 à 10, de préférence de génération 4 à 10.

## Claims

1. An assembly made up of
- a support comprising a mesoporous layer whereof the pores have an average BET diameter dimensioned so as to allow dendrimer molecules to penetrate them,
- dendrimer molecules functionalizing said layer, at least in its pores,
- a layer of molecules from the family of cyanines interacting with the dendrimer molecules and organized into J aggregates.

2. The assembly according to claim 1, **characterized in that** said layer is realized in a material chosen among AIOOH, TiO₂, ITO, SiO₂, γ-Al₂O₃, ZrO₂, SnO₂, ZnO, Ta₂O₅, or with a base of doped conductor oxide nanoparticles.

3. The assembly according to one of claims 1 and 2, **characterized in that** the average BET diameter of the pores of the mesoporous layer is greater than 1.5 nm.

4. A method for producing an assembly according to one of the preceding claims, comprising the following steps:
i. obtaining a support comprising a mesoporous layer whereof the pores have an average BET diameter dimensioned so as to allow dendrimer molecules to penetrate them,
ii. depositing a solution of dendrimer molecules on the support likely to penetrate inside the pores of the support, so as to be able to functionalize the pores,
iii. recovering the obtained assembly with a solution of cyanines reacting with said dendrimer molecules to arrange themselves into J aggregates.

5. The method according to claim 4, **characterized in that** it comprises, before step iii, an additional step consisting of positively charging the dendrimer molecules of the layer arranged on the support.

6. The method according to claim 5, **characterized in that** said additional step consists of protonating the dendrimer molecules through a reaction in an acid environment.

7. The method according to claim 4, **characterized in that** it comprises, before step iii, an additional step consisting of negatively charging the dendrimer molecules of the layer arranged on the support.

8. The method according to claim 7, **characterized in that** said additional step consists of deprotonating the dendrimer molecules through a reaction in a basic environment.

9. The method according to one of claims 4 to 8, **characterized in that** it comprises, after step ii, a rinsing step to eliminate the dendrimer molecules not having adhered to the support.

10. The method according to one of claim 4 to 9, **characterized in that** it comprises, after step iii, a rinsing step to eliminate the cyanines not having reacted with the dendrimer molecules.

11. The method according to claim 10, **characterized in that** said layer is realized with a base of a material chosen among AIOOH, TiO₂, ITO, SiO₂, γ-Al₂O₃, ZrO₂, SnO₂, ZnO, Ta₂O₅, or with a base of doped transparent conductor oxide nanoparticles.

12. The method according to one of claims 4 to 11, **characterized in that** said dendrimers are PAMAM, advantageously from generation 1 to 10, preferably from generation 4 to 10.

## Patentansprüche

1. Komplex, gebildet von
- einem Träger, der eine mesoporöse Schicht umfasst, deren Poren einen durchschnittlichen Durchmesser nach B.E.T. haben, der derart bemessen ist, dass er es Makromolekülen mit dendritischer Architektur erlaubt, dort einzudringen,
- Makromolekülen mit dendritischer Architektur, die die Schicht funktionalisieren, zumindest in ihren Poren,
- einer Schicht von Molekülen aus der Familie der Cyanine, die mit den Makromolekülen mit dendritischer Architektur interagieren und in J-Aggregaten organisiert sind.

2. Komplex nach Anspruch 1, **dadurch gekennzeichnet, dass** die Schicht aus einem Werkstoff hergestellt ist, der aus AIOOH, TiO₂. ITO, SiO₂, γ-Al₂O₃, ZrO₂, SnO₂, ZnO, Ta₂O₅ ausgewählt ist oder auch auf der Basis von Nanopartikeln dotierter leitender Oxide.

3. Komplex nach einem der Ansprüche 1 und 2, **dadurch gekennzeichnet, dass** der durchschnittliche Durchmesser nach B.E.T. der Poren der mesoporösen Schicht größer als 1,5 nm ist.

4. Verfahren zur Herstellung eines Komplexes nach einem der vorangehenden Ansprüche, das die folgenden Schritte umfasst:
i. Beschaffung eines Trägers, der eine mesoporöse Schicht umfasst, deren Poren einen durchschnittlichen Durchmesser nach B.E.T. haben, der derart bemessen ist, dass er es Makromolekülen mit dendritischer Architektur erlaubt, dort einzudringen,
ii. Aufbringen auf den Träger einer Lösung von Makromolekülen mit dendritischer Architektur, die imstande sind, in die Poren des Trägers derart einzudringen, dass die Poren funktionalisiert werden können,
iii. Bedecken des hergestellten Komplexes mit einer Cyaninlösung, die mit den Makromolekülen mit dendritischer Architektur reagiert, um sich selbst als J-Aggregate anzuordnen.

5. Verfahren nach Anspruch 4, **dadurch gekennzeichnet, dass** es vor dem Schritt iii einen zusätzlichen Schritt umfasst, der darin besteht, die Makromoleküle mit dendritischer Architektur der auf den Träger aufgebrachten Schicht positiv zu laden.

6. Verfahren nach Anspruch 5, **dadurch gekennzeichnet, dass** der zusätzliche Schritt darin besteht, die Makromoleküle mit dendritischer Architektur durch eine Reaktion in saurem Milieu zu protonieren.

7. Verfahren nach Anspruch 4, **dadurch gekennzeichnet, dass** es vor dem Schritt iii einen zusätzlichen Schritt umfasst, der darin besteht, die Makromoleküle mit dendritischer Architektur der auf den Träger aufgebrachten Schicht negativ zu laden.

8. Verfahren nach Anspruch 7, **dadurch gekennzeichnet, dass** der zusätzliche Schritt darin besteht, die Makromoleküle mit dendritischer Architektur durch eine Reaktion in basischem Milieu zu deprotonieren.

9. Verfahren nach einem der Ansprüche 4 bis 8, **dadurch gekennzeichnet, dass** es nach dem Schritt ii einen Spülschritt umfasst, um die Makromoleküle mit dendritischer Architektur, die nicht am Träger haften, zu entfernen.

10. Verfahren nach einem der Ansprüche 4 bis 9, **dadurch gekennzeichnet, dass** es nach dem Schritt iii einen Spülschritt umfasst, um die Cyanine, die nicht mit den Makromolekülen mit dendritischer Architektur reagiert haben, zu entfernen.

11. Verfahren nach Anspruch 10, **dadurch gekennzeichnet, dass** die Schicht auf der Basis eines Werkstoffs hergestellt ist, der aus AIOOH, TiO₂. ITO, SiO₂, γ-Al₂O₃, ZrO₂, SnO₂, ZnO, Ta₂O₅ oder auch auf der Basis von Nanopartikeln dotierter transparenter leitender Oxide hergestellt ist.

12. Verfahren nach einem der Ansprüche 4 bis 11, **dadurch gekennzeichnet, dass** die Makromoleküle mit dendritischer Architektur Ethylendiamin-core-poly(amidoamin) (PAMAM), in vorteilhafter Weise der Generation 1 bis 10, vorzugsweise der Generation 4 bis 10, sind.
